# EUROPEAN PATENT SPECIFICATION

(11) **EP 4 046 516 B1**
(45) Date of publication and mention of the grant of the patent: **08.11.2023**
(21) Application number: 22153951.3
(22) Date of filing: 28.01.2022
(51) Int. Cl.: A43B 3/24, A43D 1/02, G06Q 30/00, G06Q 30/06

(54) **SHOE MAKING ASSISTANCE APPARATUS**
ASSISTENZVORRICHTUNG ZUR SCHUHHERSTELLUNG
APPAREIL D'ASSISTANCE DE FABRICATION DE CHAUSSURES

(30) Priority: 19.02.2021 JP 2021025351
(43) Date of publication of application: 24.08.2022
(73) Proprietor: ASICS Corporation, Kobe-shi Hyogo 650-8555 (JP)
(72) Inventor: HATANO, Genki, Hyogo, 650-8555 (JP); TANIGUCHI, Norihiko, Hyogo, 650-8555 (JP); WAKASUGI, Shinsaku, Hyogo, 650-8555 (JP); ATARASHI, Yousuke, Hyogo, 650-8555 (JP); TAKASHIMA, Shingo, Hyogo, 650-8555 (JP); KOZUKA, Yuya, Hyogo, 650-8555 (JP); ABE, Satoru, Hyogo, 650-8555 (JP); SAKAGUCHI, Masanori, Hyogo, 650-8555 (JP); TAKAHAMA, Kenta, Hyogo, 650-8555 (JP)
(74) Representative: Marks & Clerk LLP

(56) References cited:
- US-A1- 2007 039 209
- US-A1- 2008 189 194
- US-A1- 2010 235 258
- US-A1- 2016 206 042

## Description

This nonprovisional application is based on Japanese Patent Application No. 2021-025351 filed with the Japanese Patent Office on February 19, 2021.

### BACKGROUND OF THE INVENTION

### Field of the Invention

The present disclosure relates to a shoe making assistance apparatus.

### Description of the Background Art

Made-to-order shoes that are made based on foot geometry data measured with a measurement apparatus have previously been known. Japanese Patent No. 6685303 discloses a method of making made-to-order shoes conformed to user's feet. US 2008/0189194 describes a system and method for customized fitting, building and selling of footwear, in which a footwear assembly includes a plurality of internal components, and a shell comprising an outer sole and an upper portion.

### SUMMARY OF THE INVENTION

According to the method disclosed in Japanese Patent No. 6685303, the made-to-order shoes are made by making an upper based on a footwear last (last) made based on foot geometry of a user and bonding the upper to a sole component with a glue. Various features and making methods have recently been developed as the components and the methods of making shoes, and it has been bothersome for a worker who makes shoes (who is simply referred to as a "worker" below) to select an optimal component, for example, that is readily fitted to a user's foot.

An object of the present disclosure is to readily provide shoes easily fitted to user's feet.

A shoe making assistance apparatus according to one aspect of the present disclosure assists making of a shoe. The shoe is constituted of an upper, a sole, and a shell in which the upper and the sole are inserted and which covers at least a part of the upper and the sole. The shoe making assistance apparatus includes an input device that accepts foot form data, a computing unit that selects at least one type of a shell model from among a plurality of types of shell models different in shape based on the foot form data accepted by the input device, and an output device that provides output of the shell model selected by the computing unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram for illustrating an exemplary shoe according to a first embodiment.
Fig. 2 is a diagram for illustrating an exemplary shell model according to the first embodiment.
Fig. 3 is a diagram for illustrating overview of a shoe making assistance apparatus according to the first embodiment.
Fig. 4 is a schematic diagram showing an exemplary hardware configuration of the shoe making assistance apparatus according to the first embodiment.
Fig. 5 is a flowchart showing exemplary processing in the shoe making assistance apparatus according to the first embodiment.
Fig. 6 is a diagram for illustrating an exemplary shell model according to a second embodiment.
Fig. 7 is a flowchart showing exemplary processing in the shoe making assistance apparatus according to the second embodiment.
Fig. 8 is a diagram showing exemplary additional information.

### DESCRIPTION OF THE PREFERRED EMBODIMENTS

Each embodiment will be described in detail below with reference to the drawings. The same or corresponding elements in the drawings have the same reference characters allotted and description thereof will not be repeated.

### [First Embodiment]

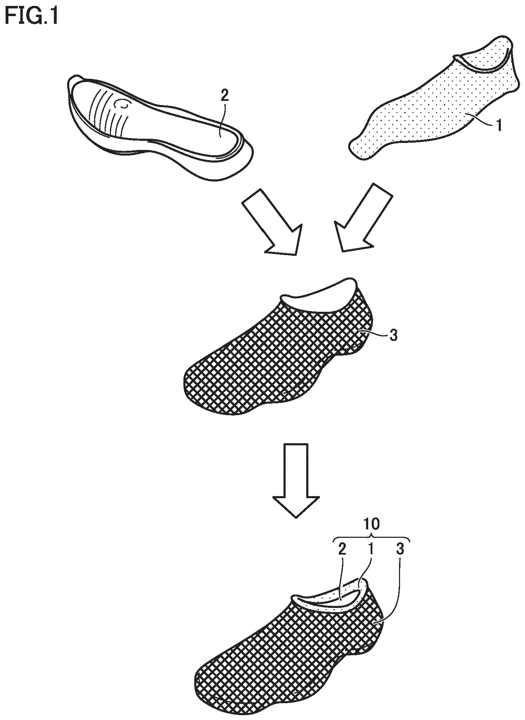

Fig. 1 is a diagram for illustrating an exemplary shoe 10 according to a first embodiment. In the first embodiment, rather than making a shoe by bonding an upper and a sole to each other, the shoe 10 is made by combining an upper 1 and a sole 2 and covering at least a part of them with a shell 3 as shown in Fig. 1. A plurality of types of shell models different in shape or the like are prepared for the shell 3 based on various factors such as a range of adjustment, design, and fitting. An exemplary scene to which the present invention is applied will be described in the first embodiment. For example, a shoe making assistance apparatus that measures a foot form of a user in a shop and selects at least one type of a shell model from among a plurality of types of shell models different in shape based on the measured foot form of the user will be described.

The upper 1 is made with a known method based on a foot form of a user measured with a measurement apparatus. An exemplary material for the upper 1 is a knit material, a mesh material, artificial leather, a nonwoven fabric, or a heat-shrinkable material. Examples of the known method include a method of directly braiding a fabric into a periphery of a last, a method of layering fabrics with a 3D printer, and a method of covering a last with a fiber sheet including heat-shrinkable threads and heating the fiber sheet. The last may be made based on the foot form of the user measured with the measurement apparatus, or a last close to the foot form of the user measured with the measurement apparatus may be selected from among a plurality of lasts placed in stock in advance.

Soles 2 have been placed in stock in shops or manufacturers for each size of a shoe, and a sole corresponding to a size of a shoe usually worn by a user is selected.

The shell 3 is a casing in which the upper 1 and the sole 2 are inserted. The shell 3 is made of urethane, acrylic, or nylon. By way of example, the shell 3 is made by using a 3D printer. The shoe 10 according to the first embodiment is made by inserting the upper 1 and the sole 2 into the shell 3.

A model of the shell 3 shown in Fig. 1 is such a model as covering the entirety of the upper 1 and the sole 2, however, the model of the shell 3 (which is also referred to as "a shell model" below) is not limited thereto. For the shell 3, there are a plurality of types of models different in shape. The shells 3 of each model have been placed in stock for each size in shops or manufacturers, and the shoe 10 is made by using one of them.

A method of making the shoe 10 constituted of the upper 1, the sole 2, and the shell 3 is as below by way of example.

Initially, the sole 2 is placed in the shell 3 and the upper 1 is placed in the shell 3 where the sole 2 has been placed. Then, a part of the upper 1 is fixed to the shell 3 by sewing or the like. Finally, a last is placed in the upper 1, and the shell 3 in which the sole 2 and the upper 1 have been inserted is heated in a microwave oven or the like. After heating, the last is removed from the upper 1 and thus the shoe 10 constituted of the upper 1, the sole 2, and the shell 3 is completed. Since the sole 2 inserted in the shell 3 is fixed by the upper 1 and the shell 3, the upper 1 and the sole 2 do not have to be bonded to each other with a glue. Therefore, burden imposed on a worker who makes shoes (who is simply referred to as a "worker" below) is lessened.

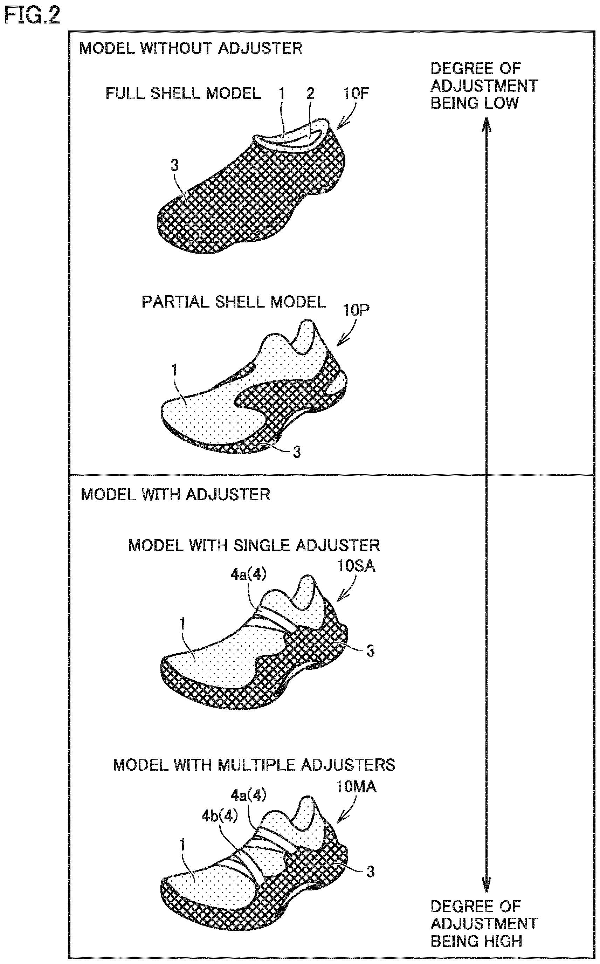

An exemplary shell model will be described with reference to Fig. 2. Fig. 2 is a diagram for illustrating an exemplary shell model according to the first embodiment. For the shell 3, there are a plurality of types of models different in shape.

By way of example, for the shell 3, there are a full shell model, a partial shell model, a model with single adjuster, and a model with multiple adjusters. The full shell model and the partial shell model correspond to a "second model" and they are models without an adjuster 4 which will be described later. The model with single adjuster and the model with multiple adjusters correspond to a "first model" and they are models with at least one adjuster 4 for adjustment of a size of the shell 3.

The full shell model is a model that covers the entirety of the upper 1 and the sole 2. As shown in Fig. 2, a shoe 10F made by using the full shell model has the entire upper 1 and sole 2 covered with the shell 3.

The partial shell model is such a model that only a part of the upper 1 and the sole is covered and it is constructed such that at least a part of a boundary between the upper 1 and the sole is covered. As shown in Fig. 2, a shoe 10P made by using the partial shell model has only a part of the upper 1 and the sole covered with the shell 3.

The model with the adjuster is such a model that only a part of the upper 1 and the sole is covered, similarly to the partial shell model described above, and it is constructed such that at least a part of the boundary between the upper 1 and the sole is covered. The model with single adjuster includes one adjuster 4a whereas the model with multiple adjusters includes an adjuster 4a and an adjuster 4b. The model with multiple adjusters may include at least three adjusters 4.

Fig. 2 shows a shoe 10SA made by using the model with single adjuster and a shoe 10MA made by using the model with multiple adjusters.

The adjuster 4 includes a belt and an adjustment mechanism that allows adjustment of a length of the belt. The adjustment mechanism may be such a mechanism (for example, a D ring) that allows adjustment of a length of the belt to any length or a mechanism (for example, a dial mechanism) that allows adjustment of a length of the belt in a plurality of steps. A position of the adjuster 4 can be varied, and the adjuster 4 is arranged in conformity with a user's foot. In the model with multiple adjusters, an allowable amount of adjustment of the size of the shell 3 may be equal or different among the multiple adjusters 4.

A degree of adjustment of the size of the shell 3 satisfies relation of the full shell model < the partial shell model < the model with single adjuster < the model with multiple adjusters, and the model with multiple adjusters is highest in degree of adjustment of the size of the shell 3 among these four models.

Therefore, when a form of a user's foot greatly deviates from a standard foot form, the model with the adjuster is preferred. By way of example, when there is a portion in which an amount of difference between foot form data of a user and standard foot form data exceeds 8%, the model with multiple adjusters is preferred. When there is a portion in which the amount of difference between the foot form data of the user and the standard foot form data exceeds 5%, the model with the degree of adjustment equal to or more than that of the model with single adjuster (that is, the model with single adjuster and the model with multiple adjusters) is preferred. When there is a portion in which the amount of difference between the foot form data of the user and the standard foot form data exceeds 3%, the model with the degree of adjustment equal to or more than that of the partial shell model (that is, the partial shell model, the model with single adjuster, and the model with multiple adjusters) is preferred. When there is a portion in which the amount of difference between the foot form data of the user and the standard foot form data is equal to or lower than 3%, any of the full shell model, the partial shell model, the model with single adjuster, and the model with multiple adjusters may be adopted. The numerical values described above are by way of example, without being limited as such. Even when the amount of difference from the standard foot form data is large, the full shell model can be adopted by providing an adjustment mechanism.

Each shell model is also characterized as below, other than magnitude of the degree of adjustment. Since the full shell model is larger in area of coverage of a foot with the shell 3 than the partial shell model, the full shell model is suitable when tight fitting is preferred, when support of the foot during motions is highly demanded (tight hold of a foot is preferred), or when the shoe 10 is required to be durable.

The partial shell model is larger in area of a foot not covered with the shell 3 than the full shell model, and hence it is suitable when loose fitting is preferred or when support of the foot during motions is not highly demanded.

The model with the adjuster allows adjustment of the size of the shell 3 by means of the adjuster 4. Therefore, this model can be adapted also to any of an example in which tight fitting is preferred, an example in which loose fitting is preferred, an example in which support of the foot during motions is highly demanded, and an example in which support of the foot during motions is not highly demanded.

Shapes of the full shell model, the partial shell model, the model with single adjuster, and the model with multiple adjusters shown in Fig. 2 are merely by way of example, without being limited to those shown in Fig. 2. Features of each of the full shell model, the partial shell model, the model with single adjuster, and the model with multiple adjusters described above are merely by way of example, without being limited to those described above.

In making a made-to-order shoe by using the shell 3, selection of an optimal shell model from among a plurality of types of shell models different in shape is required. In order to select an optimal shell model that satisfies a condition from among the plurality of types of shell models, however, experiences and know-how are required and great burdens are imposed on a worker. According to the first embodiment, however, a shoe making assistance apparatus which will be described later selects at least one type of a shell model based on foot form data of a user and provides output of the shell model. Therefore, a shoe easily fitted to a user's foot can readily be provided.

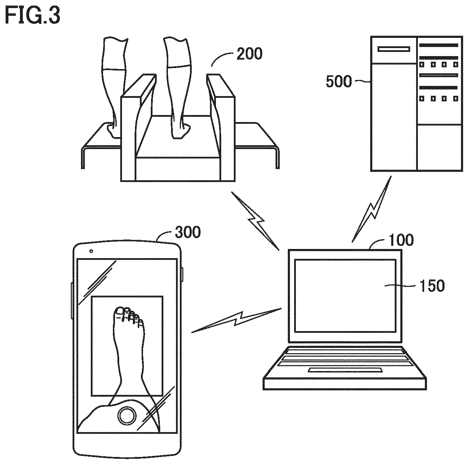

Fig. 3 is a diagram for illustrating overview of a shoe making assistance apparatus 100 according to the first embodiment. Referring to Fig. 3, the shoe making assistance apparatus 100 is an apparatus that is provided in a shop and assists making of a shoe. The shoe making assistance apparatus 100 can communicate with a measurement apparatus 200, a portable terminal 300 such as a smartphone, and/or a data server 500.

The measurement apparatus 200 is used for measuring a foot form of a user. The measurement apparatus 200 may be provided in a shop where the shoe making assistance apparatus 100 is provided or may be provided in a shop different from the shop where the shoe making assistance apparatus 100 is provided. The portable terminal 300 is used in measurement of a foot form of a user in a user's house or a shop not provided with the measurement apparatus 200. The data server 500 is provided in a manufacturer, and personal information of users, history of purchase of shoes by users, and information on models of the shells used for making shoes of the users are stored therein.

The shoe making assistance apparatus 100 accepts foot form data of a user from the measurement apparatus 200 or the portable terminal 300, selects at least one type of a shell model from among a plurality of types of shell models different in shape based on the accepted foot form data of the user, and shows the selected shell model on a display 150. The shoe making assistance apparatus 100 may provide output of the selected shell model from a printer or provide audio output of the selected shell model.

Thus, a shell model suited to a user can be selected in a shop. When the shell 3 of the selected model and of a size corresponding to the user's foot and the sole 2 of a size corresponding to the user have been placed in stock in the shop and there is an environment where the upper 1 is made, shoes that fit the user can be made in the shop. In the shop, only selection of the shell model corresponding to the user may be made, and shoes may be made in a manufacturer.

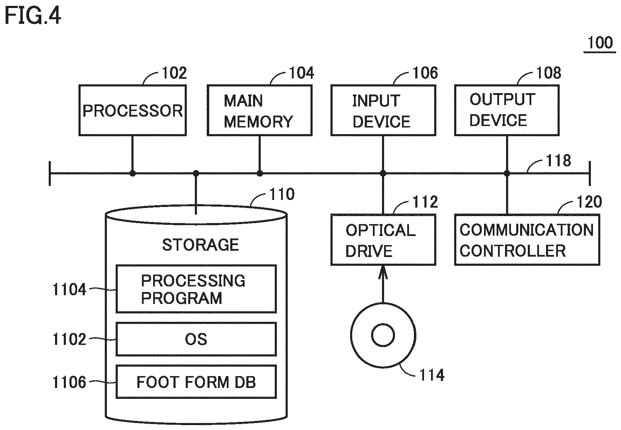

Fig. 4 is a schematic diagram showing an exemplary hardware configuration of the shoe making assistance apparatus 100 according to the first embodiment. Referring to Fig. 4, the shoe making assistance apparatus 100 includes a processor 102, a main memory 104, an input device 106, an output device 108, a storage 110, an optical drive 112, and a communication controller 120. These components are connected through a processor bus 118.

The processor 102 is implemented by a central processing unit (CPU) or a graphics processing unit (GPU), and the processor 102 can read a program (by way of example, an operating system (OS) 1102 and a processing program 1104) stored in the storage 110 and develop and execute the program on the main memory 104. The processor 102 that executes the processing program 1104 corresponds to the computing unit of the shoe making assistance apparatus 100.

The main memory 104 is implemented by a volatile storage such as a dynamic random access memory (DRAM) or a static random access memory (SRAM). The storage 110 is implemented, for example, by a non-volatile storage such as a hard disk drive (HDD) or a solid state drive (SSD).

In addition to the OS 1102 for performing basic functions, the processing program 1104 for providing functions as the shoe making assistance apparatus 100 is stored in the storage 110.

The processing program 1104 is programmed to select a shell model and provide output of the selected shell model by being executed by the processor 102 of the shoe making assistance apparatus 100.

A foot form database 1106 is further stored in the storage 110. In the foot form database 1106, standard foot form data is brought in correspondence for each size of the shell 3.

The input device 106 includes an input interface that is connected to the measurement apparatus 200 or the portable terminal 300 to accept foot form data of a user from the measurement apparatus 200 or the portable terminal 300.

The output device 108 is implemented by a display, a printer, and/or a speaker, and provides output of a shell model selected by the processor 102. The output device 108 may include an output interface for providing output of a shell model selected by the processor 102 to a terminal provided in another shop or a manufacturer. The output device 108 may include an output interface for providing output of a shell model used for making of shoes of a user to the data server 500.

The communication controller 120 exchanges data with another apparatus through wired or wireless communication. The shoe making assistance apparatus 100 receives foot form data from the measurement apparatus 200 or the portable terminal 300 through the communication controller 120. The shoe making assistance apparatus 100 may transmit a shell model selected by the processor 102 to a terminal provided in another shop or a manufacturer through the communication controller 120. The shoe making assistance apparatus 100 may transmit a shell model used for making of shoes of a user to the data server 500 through the communication controller 120.

A USB controller connected to the processor bus 118 may be provided separately from the communication controller 120 and data may be exchanged with another apparatus through USB connection.

The optical drive 112 reads a program stored in a recording medium 114 (for example, an optical recording medium such as a digital versatile disc (DVD)) where a computer readable program is stored in a non-transitory manner, and has the read program installed in the storage 110 or the like.

Though the processing program 1104 or the like executed by the shoe making assistance apparatus 100 may be installed via the computer readable recording medium 114, it may be installed as being downloaded from a server device or the like over a network. A function provided by the shoe making assistance apparatus 100 according to the first embodiment may also be performed by using a part of a module provided by the OS.

Though Fig. 4 shows an exemplary configuration in which the processor 102 executes a program to provide a function necessary as the shoe making assistance apparatus 100, some or all of provided functions may be performed by dedicated hardware circuitry (for example, an application specific integrated circuit (ASIC) or a field-programmable gate array (FPGA)). A configuration of the shoe making assistance apparatus 100 shown in Fig. 4 is by way of example, without being limited thereto.

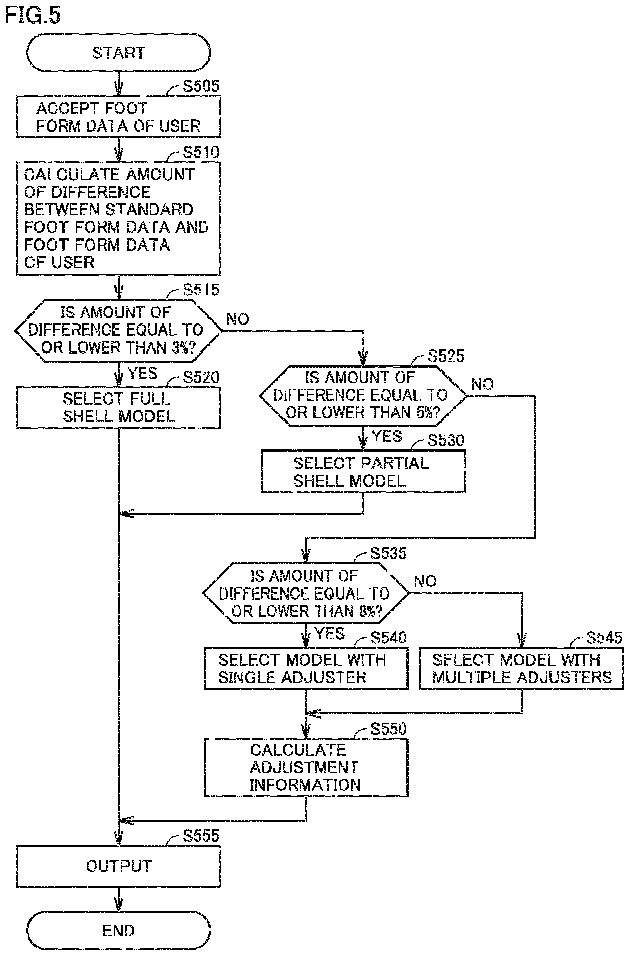

Fig. 5 is a flowchart showing exemplary processing in the shoe making assistance apparatus 100 according to the first embodiment. Step S505 is processing performed by the input device 106, step S510 to step S550 are processing performed by the processor 102, and step S555 is processing performed by the output device 108.

In the step S505, the shoe making assistance apparatus 100 accepts foot form data of a user.

In the step S510, the shoe making assistance apparatus 100 calculates an amount of difference between standard foot form data and the foot form data of the user. Specifically, initially, the shoe making assistance apparatus 100 refers to the foot form database 1106 to specify the standard foot form data close to the foot form data of the user accepted in the step S505 and a size of the shell 3 brought in correspondence with the standard foot form data. Then, the shoe making assistance apparatus 100 calculates an amount of difference between the specified standard foot form data and the foot form data of the user accepted in the step S505.

In step S515, the shoe making assistance apparatus 100 determines whether or not the amount of difference calculated in the step S510 is equal to or lower than 3%. When the amount of difference calculated in the step S510 is equal to or lower than 3% (YES in the step S515), the shoe making assistance apparatus 100 selects the full shell model (step S520) and the process makes transition to the step S555. When there is a portion in which the amount of difference calculated in the step S510 exceeds 3% (NO in the step S515), the shoe making assistance apparatus 100 has the process make transition to step S525.

In the step S525, the shoe making assistance apparatus 100 determines whether or not the amount of difference calculated in the step S510 is equal to or lower than 5%. When the amount of difference calculated in the step S510 is equal to or lower than 5% (YES in the step S525), the shoe making assistance apparatus 100 selects the partial shell model (step S530) and the process makes transition to the step S555. When there is a portion in which the amount of difference calculated in the step S510 exceeds 5% (NO in the step S525), the shoe making assistance apparatus 100 has the process make transition to step S535.

In the step S535, the shoe making assistance apparatus 100 determines whether or not the amount of difference calculated in the step S510 is equal to or lower than 8%. When the amount of difference calculated in the step S510 is equal to or lower than 8% (YES in the step S535), the shoe making assistance apparatus 100 selects the model with single adjuster (step S540) and the process makes transition to step S550. When there is a portion in which the amount of difference calculated in the step S510 exceeds 8% (NO in the step S535), the shoe making assistance apparatus 100 selects the model with multiple adjusters (step S545) and the process makes transition to step S550.

In the step S550, the shoe making assistance apparatus 100 calculates adjustment information of the adjuster 4 based on the foot form data of the user accepted in the step S505. The adjustment information includes a position where the adjuster 4 should be arranged (which is also referred to as a "position of the adjuster" below) and an amount of adjustment of the adjuster 4 arranged at that position.

Specifically, when the shoe making assistance apparatus 100 selects the model with single adjuster, it selects an area largest in amount of difference among amounts of difference calculated in the step S510, and specifies the selected area as the position of the adjuster 4 (the adjuster 4a in the example shown in Fig. 2). Furthermore, the shoe making assistance apparatus 100 calculates the amount of adjustment of the adjuster 4 based on the amount of difference in the area where the adjuster 4 is arranged among the amounts of difference calculated in the step S510.

In contrast, when the shoe making assistance apparatus 100 selects the model with multiple adjusters, the shoe making assistance apparatus 100 selects areas as many as the adjusters 4 in a descending order of the amounts of difference among the amounts of difference calculated in the step S510, and specifies the selected areas as the positions of the adjusters 4 (in the example shown in Fig. 2, the adjuster 4a and the adjuster 4b). Furthermore, the shoe making assistance apparatus 100 calculates an amount of adjustment of each adjuster 4 based on the amount of difference in the area where each adjuster 4 is arranged among the amounts of difference calculated in the step S510.

By way of example, when the shoe making assistance apparatus 100 selects the model with two adjusters shown in Fig. 2, it specifies an area largest in amount of difference among the amounts of difference calculated in the step S510 as the position of the adjuster 4a, and calculates an amount of adjustment of the adjuster 4a based on the amount of difference in that area. The shoe making assistance apparatus 100 specifies an area second largest in amount of difference among the amounts of difference calculated in the step S510 as the position of the adjuster 4b, and calculates the amount of adjustment of the adjuster 4b based on the amount of difference in that area.

When an adjustable amount is different between the adjuster 4a and the adjuster 4b, the shoe making assistance apparatus 100 specifies the area largest in amount of difference as a position of the adjuster 4 larger in adjustable amount.

In the step S555, the shoe making assistance apparatus 100 provides output of the size of the shell specified in the step S510 and the shell model or the like selected in the step S520, the step S530, the step S540, or the step S545. Specifically, when the process proceeds from the step S520 or the step S530, the shoe making assistance apparatus 100 provides output of the size of the shell specified in the step S510 and the shell model selected in the step S520 or the step S530.

When the process proceeds from the step S550, the shoe making assistance apparatus 100 provides output of the size of the shell specified in the step S510, the shell model selected in the step S540 or the step S545, and adjustment information calculated in the step S550.

After the step S555, the shoe making assistance apparatus 100 quits a series of processing shown in Fig. 5. Though one shell model is selected based on the amount of difference between the standard foot form data and the foot form data of the user in the processing shown in Fig. 5, the shoe making assistance apparatus 100 may select all shell models that can be adapted to the amount of difference between the standard foot form data and the foot form data of the user.

Specifically, in the step S520, the shoe making assistance apparatus 100 may select the partial shell model, the model with single adjuster, and the model with multiple adjusters in addition to the full shell model. In the step S530, the shoe making assistance apparatus 100 may select the model with single adjuster and the model with multiple adjusters in addition to the partial shell model. In the step S540, the shoe making assistance apparatus 100 may select the model with multiple adjusters in addition to the model with single adjuster.

When the shoe making assistance apparatus 100 selects a plurality of shell models, a user is requested to select a preferred shell model from among them.

Thus, according to the first embodiment, the shoe making assistance apparatus 100 including the input device 106 that accepts foot form data of a user, the processor 102 that selects at least one type of a shell model from among a plurality of types of shell models different in shape based on the foot form data of the user accepted by the input device 106, and the output device 108 that provides output of the shell model selected by the processor 102 is provided. Thus, in making the made-to-order shoe 10 by using the shell 3, output of a shell model suited to the user among the plurality of types of shell models different in shape is provided, and hence burden imposed on a worker is lessened. Since output of the shell model suited to the user among the plurality of types of shell models different in shape is provided, the shoe 10 can be made by using the shell 3 of the model suited to the user. Therefore, a shoe easily fitted to a user's foot can readily be provided.

When the processor 102 selects a model with an adjuster, it calculates adjustment information of the adjuster 4 based on the foot form data of the user accepted by the input device 106. The adjustment information includes a position where the adjuster 4 should be arranged and an amount of adjustment of the adjuster 4 arranged at that position. The output device 108 provides output of adjustment information calculated by the processor 102. Since the adjustment information suited to the user is thus provided, burden imposed on a worker is lessened. Since the output of the adjustment information suited to the user is provided, the shoe 10 suited to the user can be made. Therefore, a shoe easily fitted to a user's foot can readily be provided.

When the processor 102 selects a plurality of shell models, a user is requested to select a preferred shell model from among them. Therefore, the shoe 10 can be made by using the shell 3 of the model suited to the user.

The soles 2 have been placed in stock in shops or manufacturers for each size of a shoe, and a sole corresponding to a size of a shoe usually worn by the user is selected. For the soles 2, however, there may also be a plurality of types of sole models different in shape. In that case, the processor 102 selects at least one type of a sole model from among the plurality of types of sole models different in shape based on the foot form data of the user accepted by the input device 106 and the output device 108 provides output of the sole model selected by the processor 102. When the processor 102 selects a plurality of sole models, the user is requested to select a preferred sole model from among them.

For example, a sole model relatively large in lateral width, a sole model relatively small in lateral width, and a sole model having a standard lateral width may be prepared for each length in a longitudinal direction as a plurality of types of sole models different in shape, and sole models different in thickness (for example, a sole model having a relatively large thickness, a sole model having a relatively small thickness, and a sole model having a standard thickness) may be prepared for each of those models.

When the sole model is thus selected based on the foot form data of the user accepted by the input device 106, the sole 2 of the model suited to the user can be used to make the shoe 10. In making the made-to-order shoe 10 by using the shell 3, output of the sole model suited to the user among the plurality of types of sole models different in shape is provided, and hence burden imposed on a worker is lessened. Therefore, a shoe easily fitted to a user's foot can readily be provided.

When the processor 102 selects a plurality of sole models, the user is requested to select a preferred sole model from among them. Therefore, the shoe 10 can be made by using the sole 2 of the model suited to the user.

### [Second Embodiment]

In the first embodiment, the shell model includes only four models which are the full shell model, the partial shell model, the model with single adjuster, and the model with multiple adjusters. In contrast, in a second embodiment, each of the full shell model, the partial shell model, the model with single adjuster, and the model with multiple adjusters further includes a plurality of types of shell models different in shape, and a shell model is selected from among them based on foot form data of a user and additional information. Only differences from the first embodiment will be described below.

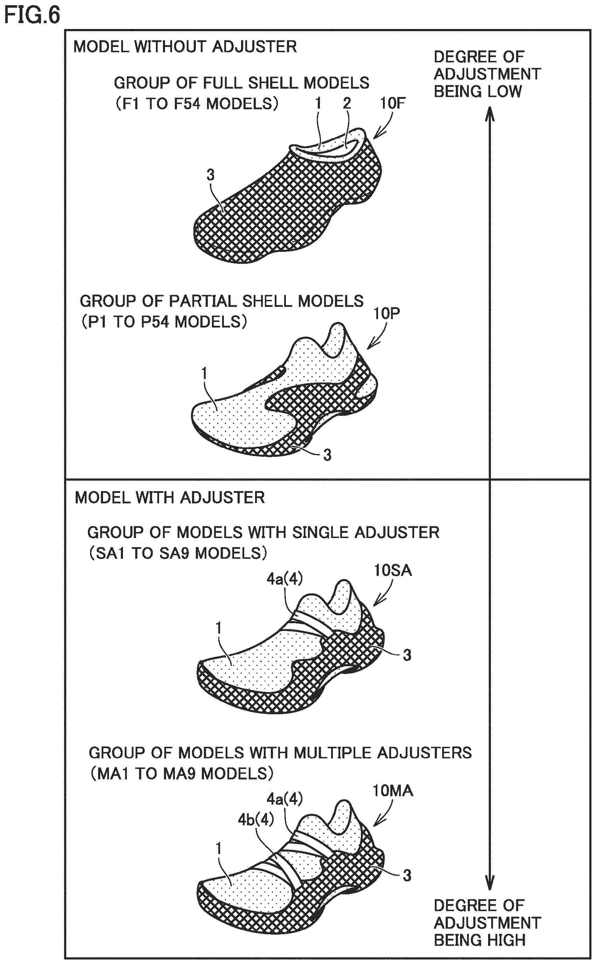

An exemplary shell model according to the second embodiment will be described with reference to Fig. 6. Fig. 6 is a diagram for illustrating an exemplary shell model according to the second embodiment. The shell model includes four groups which are a group of full shell models, a group of partial shell models, a group of models with single adjuster, and a group of models with multiple adjusters.

Each group includes a plurality of types of shell models different in shape. By way of example, there are fifty-four types of shell models (an F1 model to an F54 model, a P1 model to a P54 model) different in at least one of a peripheral length in a toe area, a peripheral length in a midfoot area, a height of a topline, and a color of the shell for shell models belonging to the group of the full shell models and the group of the partial shell models, and there are nine types of shell models (an SA1 model to an SA9 model, an MA1 model to an MA9 model) different in at least one of a height of the topline and a color of the shell in the group of models with single adjuster and the group of models with multiple adjusters.

As shown in this example, several types of shell models different in height of the topline and several types of shell models different in color of the shell are included in all groups. Several types of shell models different in peripheral length in the toe area and several types of shell models different in peripheral length in the midfoot area are included only in the group of the full shell models or the group of the partial shell models. This is in consideration of adaptability to a user who prefers relatively loose fitting or a user who prefers relatively tight fitting in the absence of an adjuster in the shell models belonging to the group of the full shell models or the group of the partial shell models.

The number of shell models belonging to each group is not limited as above, and there should only be at least two shell models. The number of shell models belonging to a group may be different or equal among the groups. Each group may include a plurality of types of shell models or the like different in peripheral length of a shell in a heel area.

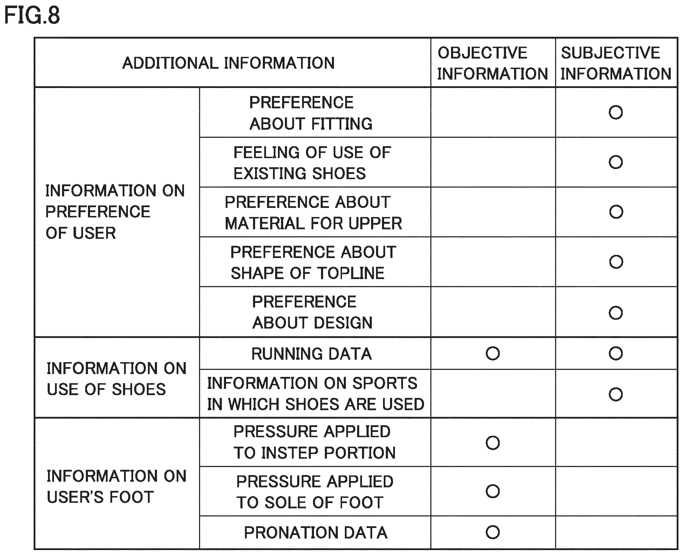

The shoe making assistance apparatus 100 further accepts additional information selected by a user, in addition to the foot form data of the user. The additional information includes at least one of information on preference of the user, information on use of shoes, and information on a user's foot, and it is used in selection of a shell model. Details of the additional information will be described later with reference to Fig. 8.

When the shoe making assistance apparatus 100 accepts the additional information in addition to the foot form data of the user, it selects at least one type of a shell model from among a plurality of types of shell models different in shape based on the foot form data of the user and the additional information, and provides output of the selected shell model.

When the selected shell model is the model with the adjuster, the shoe making assistance apparatus 100 calculates adjustment information of the adjuster 4 based on the foot form data of the user and the additional information, and further provides output of the calculated adjustment information. The adjustment information includes the position where the adjuster 4 should be arranged (the position of the adjuster 4) and an amount of adjustment of the adjuster 4 arranged at that position.

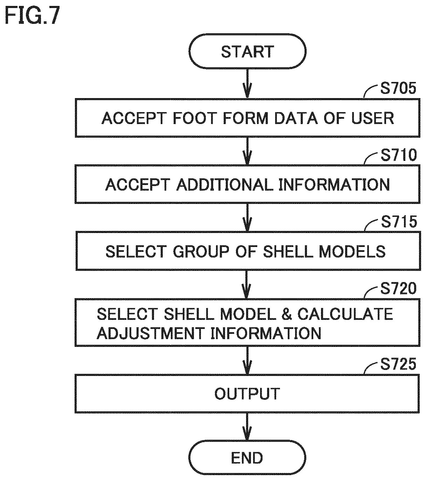

Fig. 7 is a flowchart showing exemplary processing in the shoe making assistance apparatus 100 according to the second embodiment. Step S705 and step S710 are processing performed by the input device 106, step S715 and step S720 are processing performed by the processor 102, and step S725 is processing performed by the output device 108.

In the step S705, the shoe making assistance apparatus 100 accepts foot form data of a user.

In the step S710, the shoe making assistance apparatus 100 accepts additional information selected by the user.

In the step S715, the shoe making assistance apparatus 100 selects a group of shell models based on the foot form data of the user accepted in the step S705. Specifically, initially, the shoe making assistance apparatus 100 refers to the foot form database 1106 to specify standard foot form data close to the foot form data of the user accepted in the step S705 and the size of the shell 3 brought in correspondence with the standard foot form data. Then, the shoe making assistance apparatus 100 calculates an amount of difference between the specified standard foot form data and the foot form data of the user accepted in the step S705 and selects the group of shell models based on the amount of difference.

By way of example, when the amount of difference between the foot form data of the user and the standard foot form data is equal to or lower than 3%, the shoe making assistance apparatus 100 selects the group of full shell models. When the amount of difference between the foot form data of the user and the standard foot form data exceeds 3% and equal to or lower than 5%, the shoe making assistance apparatus 100 selects the group of partial shell models. When the amount of difference between the foot form data of the user and the standard foot form data exceeds 5% and equal to or lower than 8%, the shoe making assistance apparatus 100 selects the group of models with single adjuster. When the amount of difference between the foot form data of the user and the standard foot form data exceeds 8%, the shoe making assistance apparatus 100 selects the group of models with multiple adjusters.

In the step S720, the shoe making assistance apparatus 100 selects at least one type of the shell model based on the additional information accepted in the step S710 from the group selected in the step S715. When the selected shell model is the shell model with the adjuster, in the step S720, the shoe making assistance apparatus 100 calculates contents of adjustment based on the foot form data of the user accepted in the step S705 and the additional information accepted in the step S710. The contents of adjustment include a position of arrangement of the adjuster 4 and an amount of adjustment of the adjuster 4 arranged at that position.

In the step S725, the shoe making assistance apparatus 100 provides output of the size of the shell specified in the step S715 and the shell model selected in the step S720. Specifically, when the shell model selected in the step S720 is the model without the adjuster, the shoe making assistance apparatus 100 provides output of the size of the shell specified in the step S715 and the shell model selected in the step S720.

When the shell model selected in the step S720 is the model with the adjuster, the shoe making assistance apparatus 100 provides output of the size of the shell specified in the step S715, the shell model selected in the step S720, and the adjustment information calculated in the step S720.

After the step S725, the shoe making assistance apparatus 100 quits a series of processing shown in Fig. 7. When the shoe making assistance apparatus 100 selects a plurality of shell models, a user is requested to select a preferred shell model from among them.

Through the processing shown in Fig. 7, a shell model is selected based on the foot form data of the user and the additional information. When the selected shell model is the shell model with the adjuster, adjustment information is calculated based on the foot form data of the user and the additional information.

The additional information and processing in the step S720 will be described in detail with reference to Fig. 8. Fig. 8 is a diagram showing exemplary additional information. The additional information includes at least one of information on preference of a user, information on use of shoes, and information on a user's foot.

The additional information can be categorized into objective information and subjective information based on contents of the information. The objective information is fact information and can be expressed with numerical data such as a length, a pressure, or a speed. The subjective information is user's selected information (for example, relatively loose, relatively tight, fast, and slow) and obtained by interviews with users. The subjective information can be obtained by input to the portable terminal 300 by a user.

The information on preference of the user includes at least one of information on preference about fitting, information on feeling of use of existing shoes, information on preference about a material for the upper, information on preference about a shape of a topline, and information on preference about design.

The information on use of shoes includes at least one of running data and information on sports in which the shoes are used.

The information on the user's foot includes at least one of information on a pressure applied to an instep portion, information on a pressure applied to the sole of the foot, and information on deformation of the foot (pronation data or the like).

The processing in the step S720 will be described below for each type of additional information.

### <Information on Preference About Fitting>

The information on preference about fitting is exemplary subjective information. The information on preference about fitting includes, for example, information that a user prefers "relatively loose" fitting and information that a user prefers "relatively tight" fitting. Preference about fitting may be preference about the entire shoe or preference about a specific area (for example, a toe area, a midfoot area, and/or a heel area).

By way of example, when the shoe making assistance apparatus 100 accepts information that a user prefers "relatively loose" fitting and the group of shell models selected in the step S715 is the group of full shell models or the group of partial shell models, it selects at least one type of a shell model relatively long in peripheral length in the toe area and the midfoot area.

Alternatively, when the shoe making assistance apparatus 100 accepts information that a user prefers "relatively tight" fitting and the group of shell models selected in the step S715 is the group of full shell models or the group of partial shell models, it selects at least one type of a shell model relatively short in peripheral length in the toe area and the midfoot area.

In another example, when the shoe making assistance apparatus 100 accepts information that a user prefers "relatively loose" fitting in a specific area (for example, the toe area, the midfoot area, and/or the like) and the group of shell models selected in the step S715 is the group of full shell models or the group of partial shell models, it selects at least one type of a shell model relatively long in peripheral length in the specific area.

Alternatively, when the shoe making assistance apparatus 100 accepts information that a user prefers "relatively tight" fitting in a specific area (for example, the toe area, the midfoot area, and/or the like) and the group of shell models selected in the step S715 is the group of full shell models or the group of partial shell models, it selects at least one type of a shell model relatively short in peripheral length in the specific area.

In another example, when the shoe making assistance apparatus 100 accepts information that a user prefers "relatively loose" fitting and the group of shell models selected in the step S715 is the group of models with the adjuster, the shoe making assistance apparatus 100 specifies at least one of the toe area and the midfoot area as the position of the adjuster 4, calculates the amount of adjustment based on the amount of difference in the specified area among the amounts of difference calculated in the step S715, and sets as the amount of adjustment of the adjuster 4, an amount of adjustment corrected, for example, by adding five millimeters (increment by one mark when the adjuster 4 is of a dial type) to the calculated amount of adjustment.

Alternatively, when the shoe making assistance apparatus 100 accepts information that a user prefers "relatively tight" fitting and the group of shell models selected in the step S715 is the group of models with the adjuster, the shoe making assistance apparatus 100 specifies at least one of the toe area and the midfoot portion as the position of the adjuster 4, calculates the amount of adjustment based on the amount of difference in the specified area among the amounts of difference calculated in the step S715, and sets as the amount of adjustment of the adjuster 4, an amount of adjustment corrected, for example, by subtracting five millimeters (decrement by one mark when the adjuster 4 is of a dial type) from the calculated amount of adjustment.

In another example, when the shoe making assistance apparatus 100 accepts information that a user prefers "relatively loose" fitting in a specific area (for example, the toe area, the midfoot area, and/or the like) and the group of shell models selected in the step S715 is the group of models with the adjuster, the shoe making assistance apparatus 100 specifies the specific area as the position of the adjuster 4, calculates an amount of adjustment based on an amount of difference in the specified area among the amounts of difference calculated in the step S715, and sets as the amount of adjustment of the adjuster 4, an amount of adjustment corrected, for example, by adding five millimeters (increment by one mark when the adjuster 4 is of a dial type) to the calculated amount of adjustment.

Alternatively, when the shoe making assistance apparatus 100 accepts information that a user prefers "relatively tight" fitting in a specific area (for example, the toe area, the midfoot area, and/or the like) and the group of shell models selected in the step S715 is the group of models with the adjuster, the shoe making assistance apparatus 100 specifies the specific area as the position of the adjuster 4, calculates an amount of adjustment based on the amount of difference in the specified area among the amounts of difference calculated in the step S715, and sets as the amount of adjustment of the adjuster 4, an amount of adjustment corrected, for example, by subtracting five millimeters (decrement by one mark when the adjuster 4 is of a dial type) from the calculated amount of adjustment.

A shell model in consideration of user's preference about fitting is thus selected. When the selected shell model is a model belonging to the group of models with the adjuster, adjustment information in consideration of user's preference about fitting is calculated.

### <Information on Feeling of Use of Existing Shoes>

The information on feeling of use of existing shoes is exemplary subjective information. The information on feeling of use of existing shoes includes, for example, information that existing shoes are a "product A", a size thereof is 27 cm, and the user feels tight and information that existing shoes are a "product A", a size thereof is 27 cm, and the user feels loose.

By way of example, when the shoe making assistance apparatus 100 accepts information that feeling of use of the existing shoes is "tight" in addition to the foot form data of the user, it selects a shell model and calculates adjustment information with a method similar to that in acceptance of information that the user prefers "relatively loose" fitting described above. The user who feels "tight" about the existing shoes can thus be provided with shoes including the shell 3 from which "relatively loose" fitting can be obtained.

In another example, when the shoe making assistance apparatus 100 accepts information that feeling of use of the existing shoes is "loose" in addition to the foot form data of the user, it selects a shell model and calculates adjustment information with a method similar to that in acceptance of information that the user prefers "relatively tight" fitting described above. The user who feels "loose" about the existing shoes can thus be provided with shoes including the shell 3 from which "relatively tight" fitting can be obtained.

### <Information on Preference About Material for Upper>

The information on preference about the material for the upper is exemplary subjective information. The information on preference about the material for the upper is information representing a material for the upper use of which is desired by a user, and the material includes, for example, a knit material, a mesh material, artificial leather, a nonwoven fabric, and a heat-shrinkable material. Among these materials, the knit material is more stretchable than other materials, and hence the upper made of the knit material matches a shell model of a secure hold type.

By way of example, when the shoe making assistance apparatus 100 accepts information that a user prefers a knit material in addition to the foot form data of the user, it selects a shell model and calculates adjustment information with a method similar to that in acceptance of information that the user prefers "relatively tight" fitting described above. Since the shell model in which the upper is securely held is thus selected, the upper can be prevented from losing its shape.

### <Information on Preference About Shape of Topline>

The information on preference about a shape of a topline is exemplary subjective information. The information on preference about the shape of the topline includes, for example, information that a user prefers a relatively high topline, information that a user prefers a relatively low topline, and information that a user prefers a standard height of the topline.

By way of example, when the shoe making assistance apparatus 100 accepts information on preference about the height of the topline in addition to the foot form data of the user, it selects at least one type of a shell model including the topline of a height in accordance with preference of the user from among shell models belonging to the group of shell models selected in the step S715. Furthermore, when the selected shell model is the shell model with the adjuster, the shoe making assistance apparatus 100 calculates adjustment information with a method similar to that in the step S550 (see Fig. 5).

### <Information on Preference About Design>

The information on preference about design is exemplary subjective information. The information on preference about design includes, for example information on preference about a color of the shell.

By way of example, when the shoe making assistance apparatus 100 accepts information on preference about design in addition to the foot form data of the user, it selects at least one type of a shell model in a color in accordance with preference of the user from among shell models belonging to the group of shell models selected in the step S715. Furthermore, when the selected shell model is the shell model with the adjuster, the shoe making assistance apparatus 100 calculates adjustment information with a method similar to that in the step S550 (see Fig. 5).

### <Running Data>

Running data refers, for example, to information on a pitch, a stride, and/or a speed in running by a user. Though the running data is objective numerical data (objective information) obtained from an application for a smartphone or a smart watch or a sensing device worn during running, it may be subjective information collected by interviews with the user. The subjective information in running data includes, for example, information that a stride is long, information that a stride is short, information that a speed of running is high, and information that a speed of running is low.

Since one step of a long stride is longer than one step of a short stride, in the case of the long stride, load applied to the shoe at the time of landing is higher and displacement between the foot and the shoe is more likely during running. Displacement between the foot and the shoe is more likely also when the speed of running is high. Therefore, when the stride is long or when the speed of running is high, a shell model that allows secure hold of a foot is preferred.

By way of example, when the shoe making assistance apparatus 100 accepts running data in addition to the foot form data of the user, it determines whether the stride is longer or shorter than an average value in view of the user's physical build based on running data. When a ratio (a length of a stride)/(a height) is higher than a prescribed ratio, the shoe making assistance apparatus 100 determines the stride as being long.

When the stride is long, the shoe making assistance apparatus 100 selects a shell model and calculates adjustment information with a method similar to that in acceptance of information that the user prefers "relatively tight" fitting described above. A shell model of such a type as allowing secure hold of a foot is thus selected and hence displacement between the foot and the shoe can be prevented.

### <Information on Sports in Which Shoes Are Used>

Information on sports in which shoes are used is exemplary subjective information. Information on sports in which shoes are used includes, for example, information such as football, basketball, and walking.

When shoes are used in sports in which the user makes many movements in front/rear and left/right directions such as football or basketball, a shell model from which "relatively tight" fitting can be obtained is preferred. When shoes are used in sports in which a user mainly moves in the front/rear direction and the speed of movement is low such as in walking, a shell model from which "relatively loose" fitting can be obtained is preferred.

By way of example, when the shoe making assistance apparatus 100 accepts information that shoes are used in sports in which the user makes many movements in the front/rear and left/right directions in addition to the foot form data of the user, the shoe making assistance apparatus 100 selects a shell model and calculates adjustment information with a method similar to that in acceptance of information that the user prefers "relatively tight" fitting described above. "Relatively tight" fitting can thus be obtained.

When the shoe making assistance apparatus 100 accepts information that shoes are used in sports in which the user mainly moves in the front/rear direction and the speed of movement is low in addition to the foot form data of the user, the shoe making assistance apparatus 100 selects a shell model and calculates adjustment information with a method similar to that in acceptance of information that the user prefers "relatively loose" fitting described above. "Relatively loose" fitting can thus be obtained.

### <Information on Pressure Applied to Instep Portion>

The information on a pressure applied to the instep portion is exemplary objective information. The information on the pressure applied to the instep portion includes, for example, data on a pressure applied to the instep portion measured with a pressure sensor provided in the instep portion when a user runs in test shoes provided with the pressure sensor.

When the pressure applied to the instep portion is higher than a prescribed pressure, in consideration of contact of the upper with the instep portion, a shell model relatively long in peripheral length of the shell in the toe area and the midfoot area is preferred. When the pressure applied to the instep portion is lower than the prescribed pressure, a shell model relatively short in peripheral length of the shell in the toe area and the midfoot area is preferred.

By way of example, when the shoe making assistance apparatus 100 accepts the information on the pressure applied to the instep portion in addition to the foot form data of the user, it determines whether or not the pressure applied to the instep portion is higher than a prescribed pressure based on the information on the pressure applied to the instep portion. When the pressure applied to the instep portion is higher than the prescribed pressure, the shoe making assistance apparatus 100 selects a shell model and calculates adjustment information with a method similar to that in acceptance of information that the user prefers "relatively loose" fitting described above. Contact of the upper with the instep portion is thus relaxed.

When the pressure applied to the instep portion is lower than the prescribed pressure, the shoe making assistance apparatus 100 selects a shell model and calculates adjustment information with a method similar to that in acceptance of information that the user prefers "relatively tight" fitting described above.

### <Information on Pressure Applied to Sole of Foot>

The information on a pressure applied to the sole of the foot is exemplary objective information. The information on the pressure applied to the sole of the foot includes, for example, data on a pressure applied to the sole of the foot measured with a pressure sensor when the user runs in test shoes.

When the pressure applied to the sole of the foot in the midfoot area is higher than a prescribed pressure, a shell model relatively short in peripheral length of the shell in the midfoot area is preferred.

By way of example, when the shoe making assistance apparatus 100 accepts the information on the pressure applied to the sole of the foot in addition to the foot form data of the user, it determines whether or not the pressure applied to the sole of the foot in the midfoot area is higher than the prescribed pressure based on the information on the pressure applied to the sole of the foot. When the pressure applied to the sole of the foot in the midfoot area is higher than the prescribed pressure, the shoe making assistance apparatus 100 selects a shell model and calculates adjustment information with a method similar to that in acceptance of information that the user prefers "relatively tight" fitting described above.

### <Information on Deformation of Foot>

Information on deformation of a foot includes, for example, pronation data. The pronation data is exemplary objective information. Pronation refers to such motion that a leg lands from an outer side and the heel is tilted inward during running. The pronation data includes, for example, an angle of the heel (pronation angle) with respect to the leg at the time of landing.

When the pronation angle is smaller than a prescribed angle (for example, ten degrees), a shell model relatively long in peripheral length of the shell in the toe area and the midfoot area is preferred.

By way of example, when the shoe making assistance apparatus 100 accepts the pronation data in addition to the foot form data of the user, it determines whether or not the pronation angle is smaller than a prescribed angle. When the pronation angle is smaller than the prescribed angle, the shoe making assistance apparatus 100 selects a shell model and calculates adjustment information with a method similar to that in acceptance of information that the user prefers "relatively loose" fitting described above.

In addition to the above, the information on deformation of the foot may include information on a foot form when a user holds a weight or information on a foot form when the user lifts the heel.

Thus, according to the second embodiment, the shoe making assistance apparatus 100 further accepts the additional information selected by the user in addition to the foot form data of the user. The shoe making assistance apparatus 100 selects at least one type of a shell model from among a plurality of types of shell models different in shape based on the foot form data of the user and the additional information and provides output of the selected shell model. In making the made-to-order shoe 10 by using the shell 3, output of a shell model suited to the user among the plurality of types of shell models different in shape is thus provided and hence burden imposed on a worker is lessened. Since output of the shell model suited to the user among the plurality of types of shell models different in shape is provided, the shoe 10 can be made by using the shell 3 of the model suited to the user. Therefore, a shoe easily fitted to a user's foot can readily be provided.

According to the second embodiment, when the shoe making assistance apparatus 100 selects the model with the adjuster, it calculates adjustment information based on the foot form data of the user and the additional information and provides output of the calculated adjustment information. Since output of the adjustment information suited to the user is thus provided, burden imposed on the worker is lessened. Since output of the adjustment information suited to the user is provided, the shoe 10 suited to the user can be made. Therefore, a shoe easily fitted to a user's foot can readily be provided.

When the shoe making assistance apparatus 100 selects a plurality of shell models, a user is requested to select a preferred shell model from among them. Therefore, the shoe 10 can be made by using the shell 3 of the model suited to the user.

As in the first embodiment, the soles 2 are placed in stock in shops or manufacturers for each size of a shoe, and a sole corresponding to a size of a shoe usually worn by a user is selected. In another example, also for the sole 2, there may be a plurality of types of sole models different in shape. In that case, the processor 102 selects at least one type of a sole model from among a plurality of types of sole models different in shape based on the foot form data of the user and additional information accepted by the input device 106, and the output device 108 provides output of the sole model selected by the processor 102. When the processor 102 selects a plurality of sole models, a user is requested to select a preferred sole model from among them.

The models as described in the first embodiment are available as the plurality of types of sole models different in shape. In selecting a sole model, at least one of information on preference about the sole, information on a pressure applied to the sole of the foot, and pronation data is adopted as the additional information.

### <Information on Preference About Sole>

The information on preference about the sole is categorized into information on preference of the user described above, and includes, for example, information that a user prefers a sole relatively large in thickness with good cushion and information that a user prefers a sole relatively small in thickness with stability. The information on preference about the sole is exemplary subjective information.

When the shoe making assistance apparatus 100 accepts the information on preference about the sole in addition to the foot form data of the user, it selects a sole model close to the form of the user's foot in accordance with preference of the user based on the foot form data of the user and the information on preference about the sole.

### <Information on Pressure Applied to Sole of Foot>

When a pressure applied to the sole of the foot in the midfoot area is higher than a prescribed pressure, a sole model with stability is preferred.

By way of example, when the shoe making assistance apparatus 100 accepts information on the pressure applied to the sole of the foot in addition to the foot form data of the user, it determines whether or not the pressure applied to the sole of the foot in the midfoot area is higher than a prescribed pressure based on the information on the pressure applied to the sole of the foot. When the pressure applied to the sole of the foot in the midfoot area is higher than the prescribed pressure, the shoe making assistance apparatus 100 selects a sole model relatively small in thickness which is close to the form of the user's foot and is stable.

### <Information on Pronation Angle>

When the pronation angle is smaller than a prescribed angle (for example, ten degrees), a sole model with good cushion is preferred.

By way of example, when the shoe making assistance apparatus 100 accepts pronation data in addition to the foot form data of the user, it determines whether or not the pronation angle is smaller than the prescribed angle. When the pronation angle is smaller than the prescribed angle, the shoe making assistance apparatus 100 selects a sole model relatively large in thickness which is close to the form of the user's foot and provides good cushion.

Thus, when a sole model is selected based on the foot form data of the user and the additional information accepted by the input device 106, the shoe 10 can be made by using the sole 2 of the model suited to the user. In making the made-to-order shoe 10 by using the shell 3, output of a sole model suited to the user among a plurality of types of sole models different in shape is provided, and hence burden imposed on a worker is lessened. Therefore, a shoe easily fitted to a user's foot can readily be provided.

When the processor 102 selects a plurality of sole models, a user is requested to select a preferred sole model from among them. Therefore, the shoe 10 can be made by using the sole 2 of the model suited to the user.

Embodiments are described above. The embodiments and modifications may selectively be combined as appropriate.

A shell model may be selected and adjustment information may be calculated in the second embodiment based on the foot form data of the user and one piece of additional information or based on the foot form data of the user and a plurality of pieces of additional information. When a sole model is selected in the second embodiment based on the foot form data of the user and the additional information, the sole model may be selected based on the foot form data of the user and one piece of additional information or based on the foot form data of the user and a plurality of pieces of additional information.

Selection of a shell model and calculation of adjustment information described in the first and second embodiments are merely by way of example, without being limited as such. The additional information described in the second embodiment is by way of example, without being limited as such.

Though embodiments of the present invention have been described, it should be understood that the embodiments disclosed herein are illustrative and non-restrictive in every respect. The scope of the present invention is defined by the terms of the claims.

## Claims

1. A shoe making assistance apparatus (100) that assists making of a shoe (10), the shoe (10) being constituted of an upper (1), a sole (2), and a shell (3) in which the upper (1) and the sole (2) are inserted and which covers at least a part of the upper (1) and the sole (2), the shoe making assistance apparatus (100) comprising:
an input device (106) that accepts foot form data;
a computing unit (102) that selects at least one type of a shell model from among a plurality of types of shell models different in shape based on the foot form data accepted by the input device (106); and
an output device (108) that provides output of the shell model selected by the computing unit (102).

2. The shoe making assistance apparatus (100) according to claim 1, wherein
the plurality of types of shell models are categorized into a first model with at least one adjuster for adjustment of a size of the shell (3) and a second model without the adjuster,
when the computing unit (102) selects a shell model categorized into the first model, the computing unit (102) calculates adjustment information including a position where the adjuster should be arranged and an amount of adjustment of the adjuster arranged at the position based on the foot form data accepted by the input device (106), and
the output device (108) provides output of the adjustment information calculated by the computing unit (102).

3. The shoe making assistance apparatus (100) according to claim 2, wherein
the computing unit (102) selects at least one type of a sole model from among a plurality of types of sole models different in shape based on the foot form data accepted by the input device (106), and
the output device (108) provides output of the sole model selected by the computing unit (102).

4. The shoe making assistance apparatus (100) according to claim 2 or 3, wherein
the input device (106) further accepts selected additional information, and
the computing unit (102) selects at least one type of a shell model from among the plurality of types of the shell models different in shape based on the foot form data and the additional information accepted by the input device (106).

5. The shoe making assistance apparatus (100) according to claim 4, wherein
when the computing unit (102) selects a shell model categorized into the first model, the computing unit (102) calculates the adjustment information based on the foot form data and the additional information accepted by the input device (106).

6. The shoe making assistance apparatus (100) according to claim 4 or 5, wherein
the computing unit (102) selects at least one type of a sole model from among a plurality of types of sole models different in shape based on the foot form data and the additional information accepted by the input device (106).

7. The shoe making assistance apparatus (100) according to any one of claims 4 to 6, wherein
the additional information includes at least one of objective information and subjective information selected by a user.

8. The shoe making assistance apparatus (100) according to any one of claims 4 to 7, wherein
the additional information includes at least one of information on preference of a user, information on use of a shoe (10), and information on a user's foot.

9. The shoe making assistance apparatus (100) according to claim 8, wherein
the information on preference of the user includes at least one of information on preference about fitting, feeling of use of the shoe (10) used by the user, information on preference about a material for the upper (1), information on preference about a shape of a topline, and information on preference about design.

10. The shoe making assistance apparatus (100) according to claim 8 or 9, wherein
the information on use of the shoe (10) includes at least one of running data and information on sports in which the shoe (10) is used.

11. The shoe making assistance apparatus (100) according to any one of claims 8 to 10, wherein
the information on the user's foot includes at least one of information on a pressure applied to an instep portion, information on a pressure applied to a sole of the foot, and information on deformation of the foot.

## Patentansprüche

1. Schuhherstellungs-Unterstützungsgerät (100), das das Herstellen eines Schuhs (10) unterstützt, wobei der Schuh (10) aus einem Schaft (1), einer Sohle (2) und einer Schale (3) gebildet ist, in der der Schaft (1) und die Sohle (2) eingesetzt sind, und die mindestens einen Teil des Schafts (1) und der Sohle (2) abdeckt, wobei das Schuhherstellungs-Unterstützungsgerät (100) Folgendes umfasst:
eine Eingabevorrichtung (106), die Fußformdaten empfängt;
eine Recheneinheit (102), die mindestens einen Typ eines Schalenmodells aus einer Vielzahl von Typen von Schalenmodellen, die in der Form unterschiedlich sind, basierend auf den Fußformdaten, die von der Eingabevorrichtung (106) akzeptiert wurden, auswählt; und
eine Ausgabevorrichtung (108), die eine Ausgabe des von der Recheneinheit (102) ausgewählten Schalenmodells bereitstellt.

2. Schuhherstellungs-Unterstützungsgerät (100) nach Anspruch 1, wobei
die Vielzahl von Typen von Schalenmodellen in ein erstes Modell mit mindestens einem Einsteller zum Einstellen einer Größe der Schale (3) und ein zweites Modell ohne den Einsteller kategorisiert ist,
wenn die Recheneinheit (102) ein in dem ersten Modell kategorisierte Schalemodell auswählt, die Recheneinheit (102) Einstellungsinformationen berechnet, die eine Position einschließen, in der der Einsteller eingerichtet sein sollte, und eine Einstellungsmenge des Einstellers, der an der Position basierend auf den Fußformdaten, die von der Eingabevorrichtung (106) empfangen werden, eingerichtet ist, und
die Ausgabevorrichtung (108) eine Ausgabe der Einstellungsinformationen, die von der Recheneinheit (102) berechnet werden, bereitstellt.

3. Schuhherstellungs-Unterstützungsgerät (100) nach Anspruch 2, wobei
die Recheneinheit (102) mindestens einen Typ eines Sohlenmodells aus einer Vielzahl von Typen von Sohlenmodellen, die in der Form unterschiedlich sind, basierend auf den Fußformdaten, die die Eingabevorrichtung (106) empfängt, auswählt, und
die Ausgabevorrichtung (108) eine Ausgabe des Schalenmodells, das von der Recheneinheit (102) ausgewählt wird, bereitstellt.

4. Schuhherstellungs-Unterstützungsgerät (100) nach Anspruch 2 oder 3, wobei
die Eingabevorrichtung (106) ferner ausgewählte zusätzliche Informationen empfängt, und
die Recheneinheit (102) mindestens einen Typ eines Schalenmodells aus der Vielzahl von Typen von Schalenmodellen, die in der Form unterschiedlich sind, basierend auf den Fußformdaten und den zusätzlichen Informationen, die die Eingabevorrichtung (106) empfängt, auswählt.

5. Schuhherstellungs-Unterstützungsgerät (100) nach Anspruch 4, wobei
wenn die Recheneinheit (102) ein Schalenmodell auswählt, das in dem ersten Modell kategorisiert ist, die Recheneinheit (102) die Einstellungsinformationen basierend auf den Fußformdaten und den zusätzlichen Informationen, die die Eingabevorrichtung (106) empfängt, berechnet.

6. Schuhherstellungs-Unterstützungsgerät (100) nach Anspruch 4 oder 5, wobei
die Recheneinheit (102) mindestens einen Typ eines Sohlenmodells aus einer Vielzahl von Typen von Sohlenmodellen, die in der Form unterschiedlich sind, basierend auf den Fußformdaten und den zusätzlichen Informationen, die die Eingabevorrichtung (106) empfängt, auswählt.

7. Schuhherstellungs-Unterstützungsgerät (100) nach einem der Ansprüche 4 bis 6, wobei
die zusätzlichen Informationen mindestens eine von objektiven Informationen und subjektiven Informationen, die von einem Benutzer ausgewählt werden, einschließt.

8. Schuhherstellungs-Unterstützungsgerät (100) nach einem der Ansprüche 4 bis 7, wobei
die zusätzlichen Informationen mindestens eine von Informationen über eine Vorliebe eines Benutzers, Informationen über eine Verwendung eines Schuhs (10) und Informationen über einen Fuß des Benutzers einschließt.

9. Schuhherstellungs-Unterstützungsgerät (100) nach Anspruch 8, wobei
die Informationen über eine Vorliebe des Benutzers mindestens eine von Informationen über eine Vorliebe über Passform, Nutzungsempfindung des Schuhs (10), der von dem Benutzer verwendet wird, Informationen über eine Vorliebe über ein Material für den Schaft (1), Informationen über Vorliebe über eine Form einer Oberlinie und Informationen über eine Vorliebe über Design einschließt.

10. Schuhherstellungs-Unterstützungsgerät (100) nach Anspruch 8 oder 9, wobei
die Informationen über eine Verwendung des Schuhs (10) mindestens eines von Laufdaten und Informationen über Sportarten, bei welchen der Schuh (10) verwendet wird, einschließt.

11. Schuhherstellungs-Unterstützungsgerät (100) nach einem der Ansprüche 8 bis 10, wobei
die Informationen über den Fuß des Benutzers mindestens eine von Informationen über einen Druck, der an einen Fußrückenabschnitt angelegt wird, und Informationen über Verformung des Fußes einschließt.

## Revendications

1. Appareil d'assistance de fabrication de chaussures (100) qui aide à la fabrication d'une chaussure (10), la chaussure (10) étant constituée d'une tige (1), d'une semelle (2) et d'une coque (3) dans laquelle sont insérées la tige (1) et la semelle (2) et qui recouvre au moins l'une partie de la tige (1) et de la semelle (2), l'appareil d'assistance de fabrication de chaussures (100) comprenant :
un dispositif d'entrée (106) qui accepte des données de forme du pied ;
une unité de calcul (102) qui sélectionne au moins un type de modèle de coque parmi une pluralité de types de modèles de coque de forme différente sur la base des données de forme de pied acceptées par le dispositif d'entrée (106) ; et
un dispositif de sortie (108) qui fournit une sortie du modèle de coque sélectionné par l'unité de calcul (102).

2. Appareil d'assistance de fabrication de chaussures (100) selon la revendication 1, dans lequel
la pluralité de types de modèles de coque sont classés en un premier modèle avec au moins un dispositif de réglage pour le réglage d'une taille de la coque (3) et un second modèle sans le dispositif de réglage,
lorsque l'unité de calcul (102) sélectionne un modèle de coque classé dans le premier modèle, l'unité de calcul (102) calcule des informations de réglage incluant une position où le dispositif de réglage devrait être agencé et une valeur de réglage du dispositif de réglage agencé à la position sur la base des données de forme de pied acceptées par le dispositif d'entrée (106), et
le dispositif de sortie (108) fournit la sortie des informations de réglage calculées par l'unité de calcul (102).

3. Appareil d'assistance de fabrication de chaussures (100) selon la revendication 2, dans lequel
l'unité de calcul (102) sélectionne au moins un type d'un modèle de semelle parmi une pluralité de types de modèles de semelle de forme différente sur la base des données de forme de pied acceptées par le dispositif d'entrée (106), et
le dispositif de sortie (108) fournit une sortie du modèle de semelle sélectionné par l'unité de calcul (102).

4. Appareil d'assistance de fabrication de chaussures (100) selon la revendication 2 ou 3, dans lequel
le dispositif d'entrée (106) accepte, en outre, des informations supplémentaires sélectionnées, et
le dispositif de calcul (102) sélectionne au moins un type de modèle de coque parmi la pluralité de types de modèles de coque de forme différente sur la base des données de forme de pied et des informations supplémentaires acceptées par le dispositif d'entrée (106).

5. Appareil d'assistance de fabrication de chaussures (100) selon la revendication 4, dans lequel
lorsque l'unité de calcul (102) sélectionne un modèle de coque classé dans le premier modèle, l'unité de calcul (102) calcule les informations de réglage sur la base des données de forme de pied et des informations supplémentaires acceptées par le dispositif d'entrée (106).

6. Appareil d'assistance de fabrication de chaussures (100) selon la revendication 4 ou 5, dans lequel
l'unité de calcul (102) sélectionne au moins un type de modèle de semelle parmi une pluralité de types de modèles de semelle de forme différente sur la base des données de forme de pied et des informations supplémentaires acceptées par le dispositif d'entrée (106).

7. Appareil d'assistance de fabrication de chaussures (100) selon l'une quelconque des revendications 4 à 6, dans lequel
les informations supplémentaires incluent au moins l'une des informations objectives et des informations subjectives sélectionnées par un utilisateur.

8. Appareil d'assistance de fabrication de chaussures (100) selon l'une quelconque des revendications 4 à 7, dans lequel
les informations supplémentaires incluent au moins l'une des informations sur la préférence d'un utilisateur, des informations sur l'utilisation d'une chaussure (10), et des informations sur un pied d'utilisateur.

9. Appareil d'assistance de fabrication de chaussures (100) selon la revendication 8, dans lequel
les informations sur une préférence de l'utilisateur incluent au moins l'une des informations sur la préférence concernant l'ajustage, la sensation d'utilisation de la chaussure (10) utilisée par l'utilisateur, des informations sur la préférence concernant une matière pour la tige (1), des informations sur la préférence concernant une forme de ligne supérieure, et des informations sur la préférence concernant le style.

10. Appareil d'assistance de fabrication de chaussures (100) selon la revendication 8 ou 9, dans lequel
les informations sur l'utilisation de la chaussure (10) incluent au moins l'une des données de course et des informations sur les sports dans lesquels la chaussure (10) est utilisée.

11. Appareil d'assistance de fabrication de chaussures (100) selon l'une quelconque des revendications 8 à 10, dans lequel
les informations sur le pied de l'utilisateur incluent au moins l'une des informations sur une pression appliquée à une partie coup-de-pied, des informations sur une pression appliquée à une semelle du pied, et des informations sur la déformation du pied.
